# EUROPEAN PATENT APPLICATION

(11) **EP 4 549 840 A1**
(43) Date of publication of application: **07.05.2025**
(21) Application number: 23871335.8
(22) Date of filing: 23.06.2023
(51) Int. Cl.: F25B 21/00

(54) **SOLID-STATE REFRIGERATION DEVICE**

(30) Priority: 26.09.2022 JP 2022152286
(71) Applicant: DAIKIN INDUSTRIES, LTD., Osaka-shi, Osaka 530-0001 (JP)
(72) Inventor: YOSHIMOTO, Akio, Osaka-shi, Osaka 530-0001 (JP)
(74) Representative: Hoffmann Eitle
(86) International application number: PCT/JP2023/023341
(87) International publication number: WO 2024/070090

(57) **Abstract**

A solid-state refrigeration apparatus performs a heat dissipation operation and a heat absorption operation. **In** the heat dissipation operation, a predetermined force field is applied to a solid-state refrigerant substance (12) in a housing (11) and a heat medium is moved in a first direction in an internal flow path (13) of the housing (11), whereby warm thermal energy generated in the solid-state refrigerant substance (12) is conveyed to the outside of the housing (11) by the heat medium. **In** the heat absorption operation, a force field smaller than the predetermined force field is applied to the solid-state refrigerant substance (12) or the predetermined force field is removed and the heat medium is moved in a second direction opposite to the first direction in the internal flow path (13), whereby cold thermal energy generated in the solid-state refrigerant substance (12) is conveyed to the outside of the housing (11) by the heat medium. The solid-state refrigeration apparatus includes a heat exchange amount changer (30, 53, 54, 61, 62, 81, 82) configured to be capable of changing a heat exchange amount between the heat medium and the solid-state refrigerant substance (12) in at least one of the heat dissipation operation or the heat absorption operation.

## Description

### TECHNICAL FIELD

The present disclosure relates to a solid-state refrigeration apparatus.

### BACKGROUND ART

There has been known a magnetic refrigeration apparatus that produces cold thermal energy and warm thermal energy using a magnetocaloric effect. Patent Document 1 discloses a magnetic heat pump apparatus using a magnetic working substance having a magnetocaloric effect.

### CITATION LIST

### PATENT DOCUMENT

Patent Document 1: Japanese Unexamined Patent Publication No. 2016-11799

### SUMMARY OF THE INVENTION

### TECHNICAL PROBLEM

The magnetic working substance has the greatest magnetocaloric effect (calorific value, endothermic amount) in the vicinity of the Curie temperature thereof. However, when operation of the magnetic refrigeration apparatus is stopped for a long period of time, the temperature of the magnetic working substance becomes equal to an ambient temperature (outdoor air temperature in a case where the magnetic working substance is located outdoors), and may deviate from the Curie temperature. Even during the operation of the magnetic refrigeration apparatus, the temperature of the magnetic working substance may deviate from the Curie temperature due to, e.g., a rapid load change. In such a state, the magnetic working substance deviates from the vicinity of the Curie temperature, and for this reason, the magnetic refrigeration apparatus cannot fulfill a predetermined ability. For this reason, a technique of adjusting the temperature of the magnetic working substance is required.

In contrast, Patent Document 1 has proposed use of another heat source such as a Peltier element for controlling (adjusting) the temperature of the magnetic working substance, for example, at the time of starting the apparatus.

However, when the another heat source is used for adjusting the temperature of the magnetic working substance, there arises a problem that an efficiency at the time of starting the apparatus is lowered due to energy consumed by the another heat source. Further, in a case where an auxiliary apparatus such as a thermal storage source is used for adjusting the temperature of the magnetic working substance, there arises a problem that the size of the entire apparatus and a manufacturing cost increase. Further, in a case where heat of fluid in a heat exchanger or a secondary refrigerant system is used for adjusting the temperature of the magnetic working substance, there arises a problem that the apparatus does not effectively operate unless the temperature of the fluid is in the vicinity of the Curie temperature of the magnetic working substance.

It is an object of the present disclosure to freely adjust the temperature of a solid-state refrigerant substance in a solid-state refrigeration apparatus such as a magnetic refrigeration apparatus.

### SOLUTION TO THE PROBLEM

A first aspect of the present disclosure is directed to a solid-state refrigeration apparatus including a housing (11), a force field modulator (15), and a heat medium conveyor (21, 21A). The housing (11) has a solid-state refrigerant substance (12) and an internal flow path (13) through which a heat medium flows while exchanging heat with the solid-state refrigerant substance (12). The force field modulator (15) induces a caloric effect by making a force field variation on the solid-state refrigerant substance (12) in the housing (11). The heat medium conveyor (21, 21A) conveys the heat medium to and from the solid-state refrigerant substance (12) in the housing (11) in accordance with the force field variation. The solid-state refrigeration apparatus performs a heat dissipation operation and a heat absorption operation. In the heat dissipation operation, a predetermined force field is applied to the solid-state refrigerant substance (12) and the heat medium is moved in a first direction in the internal flow path (13), whereby warm thermal energy generated in the solid-state refrigerant substance (12) is conveyed to the outside of the housing (11) by the heat medium. In the heat absorption operation, a force field smaller than the predetermined force field is applied to the solid-state refrigerant substance (12) or the predetermined force field is removed and the heat medium is moved in a second direction opposite to the first direction in the internal flow path (13), whereby cold thermal energy generated in the solid-state refrigerant substance (12) is conveyed to the outside of the housing (11) by the heat medium. The solid-state refrigeration apparatus further includes a heat exchange amount changer (30, 53, 54, 61, 62, 81, 82) configured to be capable of changing a heat exchange amount between the heat medium and the solid-state refrigerant substance (12) in at least one of the heat dissipation operation or the heat absorption operation.

**In** the first aspect, the heat exchange amount between the heat medium and the solid-state refrigerant substance (12) in the heat dissipation operation or the heat absorption operation is changeable by the heat exchange amount changer (30, 53, 54, 61, 62, 81, 82). Thus, the solid-state refrigerant substance (12) can be controlled to a predetermined temperature by changing a balance between a warm thermal energy storage amount in the heat dissipation operation and a cold thermal energy storage amount in the heat absorption operation.

A second aspect of the present disclosure is an embodiment of the first aspect. **In** the second aspect, the heat exchange amount changer (30, 53, 54, 61, 62, 81, 82) is configured to be capable of changing the flow rate of the heat medium per unit time in at least one of the heat dissipation operation or the heat absorption operation.

In the second aspect, the heat exchange amount between the heat medium and the solid-state refrigerant substance (12) is changeable by changing the flow rate of the heat medium per unit time in the heat dissipation operation or the heat absorption operation.

A third aspect of the present disclosure is an embodiment of the first or second aspect. In the third aspect, the heat exchange amount changer (30, 53, 54, 61, 62, 81, 82) is configured to be capable of changing a conveying time for the heat medium in at least one of the heat dissipation operation or the heat absorption operation.

In the third aspect, the heat exchange amount between the heat medium and the solid-state refrigerant substance (12) is changeable by changing the conveying time for the heat medium in the heat dissipation operation or the heat absorption operation.

A fourth aspect of the present disclosure is an embodiment of any one of the first to third aspects. In the fourth aspect, the heat exchange amount changer (30, 53, 54, 61, 62, 81, 82) is configured to be capable of changing heat medium conveying timing in at least one of the heat dissipation operation or the heat absorption operation.

In the fourth aspect, the heat exchange amount between the heat medium and the solid-state refrigerant substance (12) is changeable by changing the heat medium conveying timing in the heat dissipation operation or the heat absorption operation.

A fifth aspect of the present disclosure is an embodiment of any one of the first to fourth aspects. In the fifth aspect, the solid-state refrigerant substance (12) is a magnetic working substance (12), and the force field modulator (15) is a magnetic field modulator (15) that makes a magnetic field variation on the magnetic working substance (12).

In the fifth aspect, the magnetic working substance (12) can be controlled to a predetermined temperature in the magnetic refrigeration apparatus.

### BRIEF DESCRIPTION OF THE DRAWINGS

FIG. 1 is a piping system diagram of a magnetic refrigeration apparatus according to an embodiment.
FIG. 2 is a diagram schematically illustrating a relationship between the temperature and magnetocaloric effect of a plurality of solid-state refrigerant substances arranged in a cascade manner in a single housing in the magnetic refrigeration apparatus according to the embodiment.
FIG. 3 is a diagram schematically illustrating a relationship between the temperature and magnetocaloric effect of a plurality of solid-state refrigerant substances arranged in a cascade manner in a plurality of partial housings in the magnetic refrigeration apparatus according to the embodiment.
FIG. 4 illustrates piping system diagrams for describing a heat dissipation operation and a heat absorption operation performed by the magnetic refrigeration apparatus according to the embodiment.
FIG. 5 is a diagram illustrating a mechanism for decreasing the temperature of a magnetic working substance by a heat exchange amount changer in the magnetic refrigeration apparatus according to the embodiment.
FIG. 6 is a diagram illustrating a mechanism for increasing the temperature of the magnetic working substance by the heat exchange amount changer in the magnetic refrigeration apparatus according to the embodiment.
FIG. 7 is a chart illustrating a change in a magnetic field and a heat medium flow rate with time during a normal operation of the magnetic refrigeration apparatus according to the embodiment.
FIG. 8 is a chart illustrating a change in the magnetic field and the heat medium flow rate with time when the flow rate of a heat medium per unit time is changed in the magnetic refrigeration apparatus according to the embodiment.
FIG. 9 is a chart illustrating a change in the magnetic field and the heat medium flow rate with time when a conveying time for the heat medium is changed in the magnetic refrigeration apparatus according to the embodiment.
FIG. 10 is a chart illustrating a change in a magnetic field and a heat medium flow rate with time during a normal operation of a magnet rotation type magnetic refrigeration apparatus according to a first variation.
FIG. 11 is a chart illustrating a change in the magnetic field and the heat medium flow rate with time when heat medium conveying timing is changed in the magnet rotation type magnetic refrigeration apparatus according to the first variation.
FIG. 12 is a piping system diagram of a magnetic refrigeration apparatus according to a second variation in a heat dissipation operation.
FIG. 13 is a piping system diagram of the magnetic refrigeration apparatus according to the second variation in a heat absorption operation.
FIG. 14 is a piping system diagram of a magnetic refrigeration apparatus according to a third variation in a heat dissipation operation.
FIG. 15 is a piping system diagram of the magnetic refrigeration apparatus according to the third variation in a heat absorption operation.
FIG. 16 is a piping system diagram of a magnetic refrigeration apparatus according to a fourth variation.

### DESCRIPTION OF EMBODIMENTS

Hereinafter, embodiments of the present disclosure will be described with reference to the drawings. The embodiments below are merely exemplary ones in nature, and are not intended to limit the scope, applications, or use of the invention.

### (Embodiments)

Embodiments will be described. A magnetic refrigeration apparatus (1) of this embodiment is a solid-state refrigeration apparatus that adjusts the temperature of a heat medium using a magnetocaloric effect, and is applied to, for example, an air conditioner. In this case, the magnetic refrigeration apparatus (1) adjusts the temperature of air in an air-conditioning target space. The air-conditioning target space is, for example, an indoor space. The magnetic refrigeration apparatus (1) switches between a cooling operation and a heating operation.

### <Configuration of Magnetic Refrigeration Apparatus>

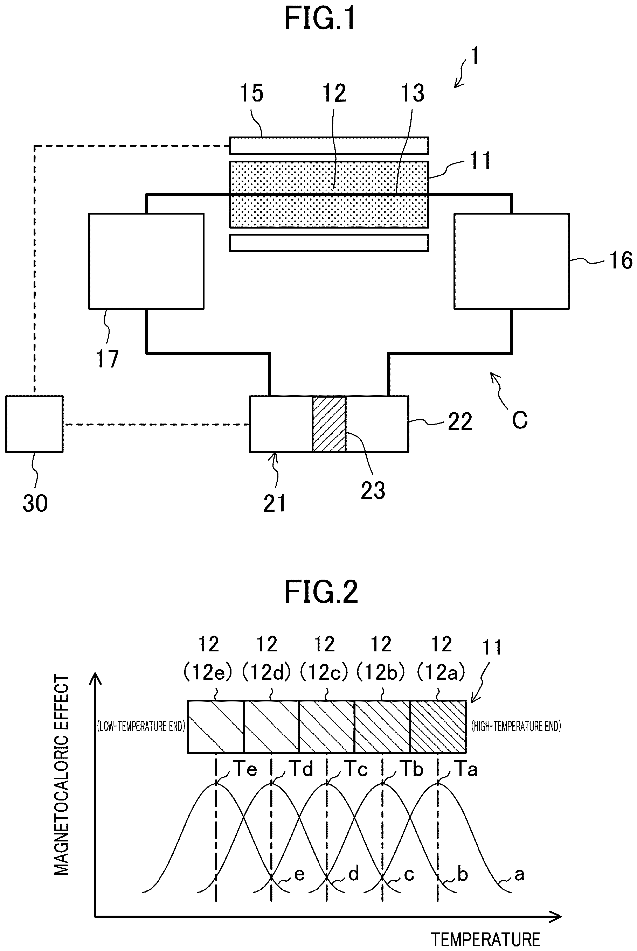

As illustrated in FIG. 1, the magnetic refrigeration apparatus (1) includes a heat medium circuit (C) filled with the heat medium. The heat medium filling the heat medium circuit (C) is conveyed through the heat medium circuit (C). Examples of the heat medium include refrigerant, water, brine, etc.

The magnetic refrigeration apparatus (1) mainly includes a housing (11), a magnetic field modulator (15) as a force field modulator, a first heat exchanger (16), a second heat exchanger (17), a reciprocating pump (21) as a heat medium conveyor, and a controller (30). The housing (11), the first heat exchanger (16), the second heat exchanger (17), and the reciprocating pump (21) are connected to each other through a heat medium pipe to form the heat medium circuit (C).

The housing (11) has a magnetic working substance (12) as a solid-state refrigerant substance, and an internal flow path (13) in which the heat medium flows while exchanging heat with the solid-state refrigerant substance (12). The housing (11) is a hollow case or column. The inside of the housing (11) is filled with the magnetic working substance (12).

The magnetic working substance (12) generates heat when a magnetic field is applied thereto or the intensity of the applied magnetic field increases. The magnetic working substance (12) absorbs heat when the magnetic field is removed therefrom or when the intensity of the applied magnetic field decreases. Examples of the material of the magnetic working substance (12) include Gd₅(Ge_{0.5}Si_{0.5})₄, La(Fe₁₋ₓSiₓ)₁₃, La(Fe₁₋ₓCoₓSi_{y})₁₃, La(Fe₁₋ₓSiₓ)₁₃H_{y}, and Mn(As_{0.9}Sb_{0.1}).

The magnetic working substance (12) may include a plurality of substances having different Curie temperatures at which the caloric effect is maximized. In this case, the plurality of substances is arranged in the Curie temperature ascending order (i.e., in a cascade manner) along the internal flow path (13). For example, as illustrated in FIG. 2, in the single housing (11), five types of magnetic working substances (12), i.e., a first substance (12a), a second substance (12b), a third substance (12c), a fourth substance (12d), and a fifth substance (12e), may be arranged in order from a high temperature side to a low temperature side. Various magnetic working substances (12) differ from each other in Curie temperature, i.e., a relationship between the temperature and the magnetocaloric effect. In this example, the relationship Ta > Tb > Tc > Td > Te is satisfied when the first substance (12a) has a Curie temperature Ta, the second substance (12b) has a Curie temperature Tb, the third substance (12c) has a Curie temperature Tc, the fourth substance (12d) has a Curie temperature Td, and the fifth substance (12e) has a Curie temperature Te.

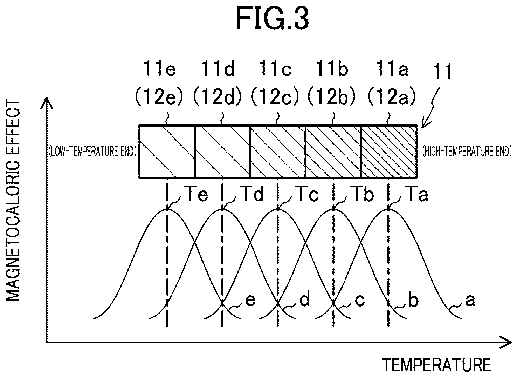

Instead of the cascade arrangement illustrated in FIG. 2, for example, as illustrated in FIG. 3, the housing (11) may include a plurality of partial housings (11a to 11e) connected in series in the heat medium circuit (C), and each of the plurality of partial housings (11a to 11e) may house a corresponding one of the plurality of substances (12a to 12e).

The magnetic field modulator (15) induces the caloric effect by making a magnetic field variation on the magnetic working substance (12) in the housing (11). The magnetic field modulator (15) includes an electromagnet capable of modulating the magnetic field, for example. The magnetic field modulator (15) performs a first modulation operation and a second modulation operation. In the first modulation operation, a predetermined magnetic field is applied to the magnetic working substance (12). In the second modulation operation, a magnetic field smaller than the predetermined magnetic field is applied, or the predetermined magnetic field is removed.

The first heat exchanger (16) may be an indoor heat exchanger that exchanges heat between the heat medium heated by the magnetic working substance (12) and indoor air. Alternatively, the first heat exchanger (16) may exchange heat between the heat medium heated by the magnetic working substance (12) and secondary refrigerant flowing through a utilization unit (not illustrated) (e.g., air handling unit). The second heat exchanger (17) may be an outdoor heat exchanger that exchanges heat between the heat medium cooled by the magnetic working substance (12) and outdoor air. Alternatively, the second heat exchanger (17) may exchange heat between the heat medium cooled by the magnetic working substance (12) and secondary refrigerant flowing through a heat source unit (not illustrated) (e.g., cooling tower). In the heat medium circuit (C), the first heat exchanger (16) and the second heat exchanger (17) are connected through the internal flow path (13) of the housing (11).

The reciprocating pump (21) conveys the heat medium to and from the magnetic working substance (12) in the housing (11) in accordance with the magnetic field variation. The reciprocating pump (21) is, for example, a piston pump. The reciprocating pump (21) has a pump case (22), a piston (23), and a drive mechanism (not illustrated). The piston (23) is disposed inside the pump case (22). The piston (23) divides the inside of the pump case (22) into two chambers. In the heat medium circuit (C), one chamber (hereinafter referred to as a first chamber) of the pump case (22) is connected to the first heat exchanger (16), and the other chamber (hereinafter referred to as a second chamber) of the pump case (22) is connected to the second heat exchanger (17). The drive mechanism described above has a rod coupled to the piston (23), a crank coupled to the rod, and an electric motor that drives the crank. In response to rotary drive of the crank by the electric motor, the rod moves back and forth. This allows the piston (23) to reciprocate inside the pump case (22).

Specifically, the reciprocating pump (21) alternately and repeatedly performs a first conveying operation and a second conveying operation. In the first conveying operation, the piston (23) moves in a direction of expanding the first chamber and contracting the second chamber. Accordingly, the heat medium is discharged from the second chamber, and the heat medium in the heat medium circuit (C) sequentially moves toward the second heat exchanger (17), the housing (11) (internal flow path (13)), and the first heat exchanger (16), and is sucked into the first chamber. In the second conveying operation, the piston (23) moves in a direction of contracting the first chamber and expanding the second chamber. Accordingly, the heat medium is discharged from the first chamber, and the heat medium in the heat medium circuit (C) sequentially moves toward the first heat exchanger (16), the housing (11) (internal flow path (13)), and the second heat exchanger (17), and is sucked into the second chamber.

The controller (30) controls, for example, operation of each of the magnetic field modulator (15) and the reciprocating pump (21). The controller (30) includes, for example, a microcomputer and a memory device (specifically, semiconductor memory) that stores software for operating the microcomputer. The controller (30) is connected to each of the magnetic field modulator (15) and the reciprocating pump (21) via a communication line.

### <Operation of Magnetic Refrigeration Apparatus>

The magnetic refrigeration apparatus (1) performs a heat dissipation operation (hot blow) and a heat absorption operation (cold blow). In the heat dissipation operation, a predetermined magnetic field is applied to the magnetic working substance (12) and the heat medium is moved in a first direction in the internal flow path (13), whereby warm thermal energy generated in the magnetic working substance (12) is conveyed to the outside of the housing (11), for example, the first heat exchanger (16), by the heat medium and is dissipated. In the heat absorption operation, a magnetic field smaller than the predetermined magnetic field is applied to the magnetic working substance (12) or the predetermined magnetic field is removed and the heat medium is moved in a second direction opposite to the first direction in the internal flow path (13), whereby cold thermal energy generated in the magnetic working substance (12) is conveyed to the outside of the housing (11), for example, the second heat exchanger (17), by the heat medium and is absorbed.

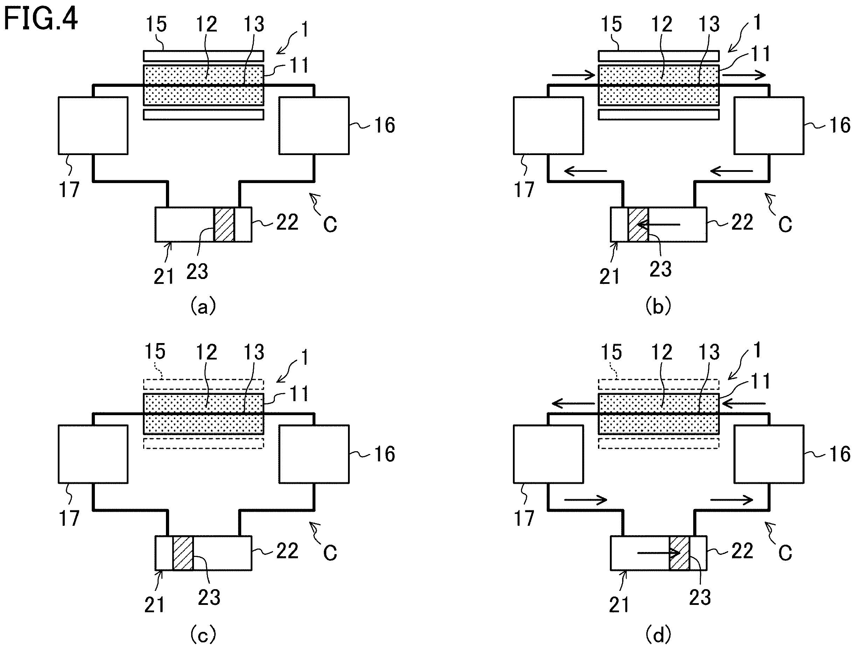

Specifically, as illustrated in (a) and (b) of FIG. 4, in the heat dissipation operation, the first modulation operation (excitation) of the magnetic field modulator (15) and the first conveying operation of the reciprocating pump (21) are performed. In the heat dissipation operation, the heat medium is heated in the internal flow path (13) of the housing (11). The heated heat medium dissipates heat in the first heat exchanger (16).

As illustrated in (c) and (d) of FIG. 4, in the heat absorption operation, the second modulation operation (demagnetization) of the magnetic field modulator (15) and the second conveying operation of the reciprocating pump (21) are performed. In the heat absorption operation, the heat medium is cooled in the internal flow path (13) of the housing (11). The cooled heat medium absorbs heat in the second heat exchanger (17).

When the magnetic refrigeration apparatus (1) performs a cycle (active magnetic refrigerator (AMR) cycle) of repeating the heat dissipation operation and the heat absorption operation described above, the magnetic working substance (12) in the housing (11) is recovered while generating the warm thermal energy and the cold thermal energy by the magnetic field variation. Accordingly, a temperature gradient is generated in the housing (11), resulting in a great temperature difference between the high-temperature end and low-temperature end of the housing (11).

In a case where the first heat exchanger (16) is the indoor heat exchanger and the second heat exchanger (17) is the outdoor heat exchanger, the heat medium heated by the magnetic working substance (12) dissipates heat to the indoor air in the first heat exchanger (16) to heat the indoor air, while the heat medium cooled by the magnetic working substance (12) absorbs heat from the outdoor air in the second heat exchanger (17). Thus, the heating operation can be performed.

In this embodiment, the case where the internal flow path (13) is located along the longitudinal direction of the housing (11), in other words, the case where a high-temperature-side inlet/outlet port and a low-temperature-side inlet/outlet port of the internal flow path (13) are each arranged at both ends of the housing (11) in the longitudinal direction thereof, has been described as an example, but the location of the internal flow path (13) is not limited thereto. For example, the high-temperature-side inlet/outlet port and low-temperature-side inlet/outlet port of the internal flow path (13) may be arranged on the same surface of the housing (11). In this case, a direction in which the heat medium flows from the low-temperature-side inlet/outlet port to the high-temperature-side inlet/outlet port in the internal flow path (13) is a "first direction", and a direction in which the heat medium flows from the high-temperature-side inlet/outlet port to the low-temperature-side inlet/outlet port is a "second direction".

### <Heat Exchange Amount Changer>

In the magnetic refrigeration apparatus (1) of this embodiment, the controller (30) controls the reciprocating pump (21) to be capable of changing a heat exchange amount between the heat medium and the magnetic working substance (12) in at least one of the heat dissipation operation or the heat absorption operation. That is, in this embodiment, the controller (30) and the reciprocating pump (21) form a heat exchange amount changer. The controller (30) may be provided separately from the reciprocating pump (21), or part of the controller (30) that performs a heat exchange amount changing function may be provided integrally with the reciprocating pump (21).

As will be described below, the temperature of the magnetic working substance (12) can be adjusted by the heat exchange amount changer. In the heat dissipation operation (hot blow) in the AMR cycle, the warm thermal energy generated by the magnetic working substance (12) due to the magnetocaloric effect is supplied from the high-temperature end of the housing (11) to the outside (first heat exchanger (16)) by the heat medium flowing from the low-temperature end to the high-temperature end of the housing (11). At this time, not all the warm thermal energy generated by the magnetic working substance (12) is conveyed to the high-temperature end of the housing (11), and part of the warm thermal energy is stored in the magnetic working substance (12) itself. Similarly in the heat absorption operation (cold blow), not all the cold thermal energy generated by the magnetic working substance (12) is conveyed to the low-temperature end of the housing (11), and part of the cold thermal energy is stored in the magnetic working substance (12) itself. In this manner, the magnetic working substance (12) itself, which generates the warm thermal energy and the cold thermal energy, stores the thermal energy, whereby the magnetic working substance (12) is recovered. Thus, the temperature of the magnetic working substance (12) is determined by a balance between a warm thermal energy storage amount in the heat dissipation operation and a cold thermal energy storage amount in the heat absorption operation. In other words, the temperature of the magnetic working substance (12) is determined by a balance between the amount of warm thermal energy conveyed to the high-temperature end in the heat dissipation operation and the amount of cold thermal energy conveyed to the low-temperature end in the heat absorption operation. Thus, the temperature of the magnetic working substance (12) can be increased or decreased by changing the balance between the warm thermal energy storage amount in the heat dissipation operation and the cold thermal energy storage amount in the heat absorption operation by the heat exchange amount changer.

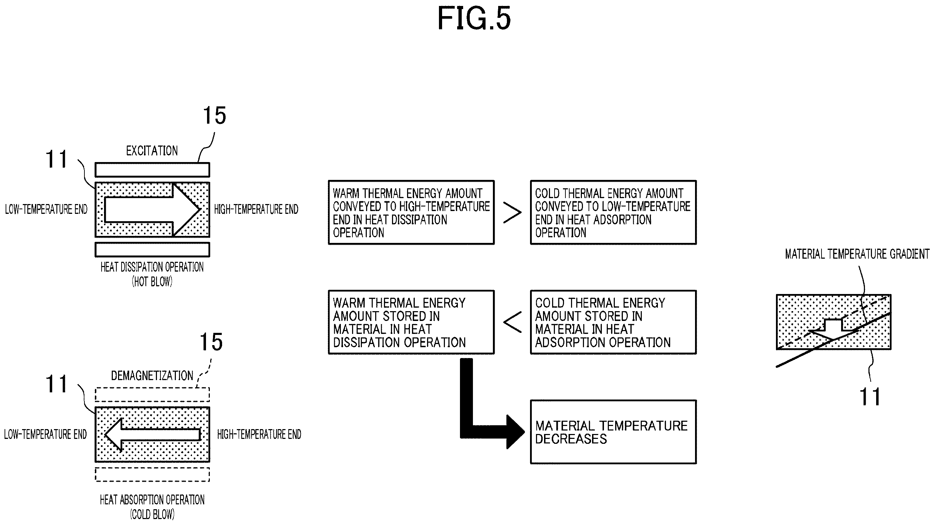

For example, as illustrated in FIG. 5, when the "amount of warm thermal energy conveyed to the high-temperature end in the heat dissipation operation" is greater than the "amount of cold thermal energy conveyed to the low-temperature end in the heat absorption operation", the "amount of warm thermal energy stored in the magnetic working substance (hereinafter, also simply referred to as a material) in the heat dissipation operation" is smaller than the "amount of cold thermal energy stored in the material in the heat absorption operation", and the material temperature (material temperature gradient in the case of the cascade arrangement) decreases.

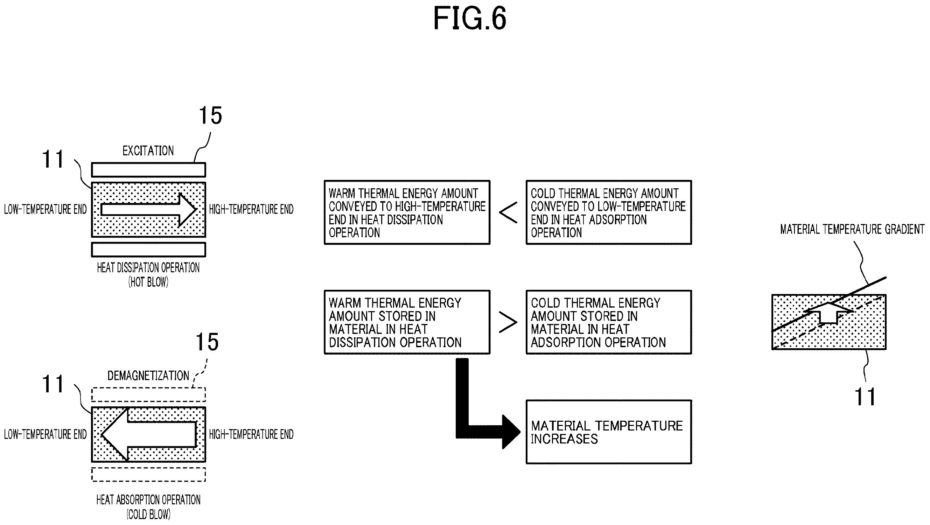

As illustrated in FIG. 6, when the "amount of warm thermal energy conveyed to the high-temperature end in the heat dissipation operation" is smaller than the "amount of cold thermal energy conveyed to the low-temperature end in the heat absorption operation", the "amount of warm thermal energy stored in the material in the heat dissipation operation" is greater than the "amount of cold thermal energy stored in the material in the heat absorption operation", and the material temperature (material temperature gradient in the case of the cascade arrangement) increases.

The heat exchange amount changer may be capable of changing the heat exchange amount between the heat medium and the solid-state refrigerant substance (12) by changing the flow rate of the heat medium per unit time in at least one of the heat dissipation operation or the heat absorption operation.

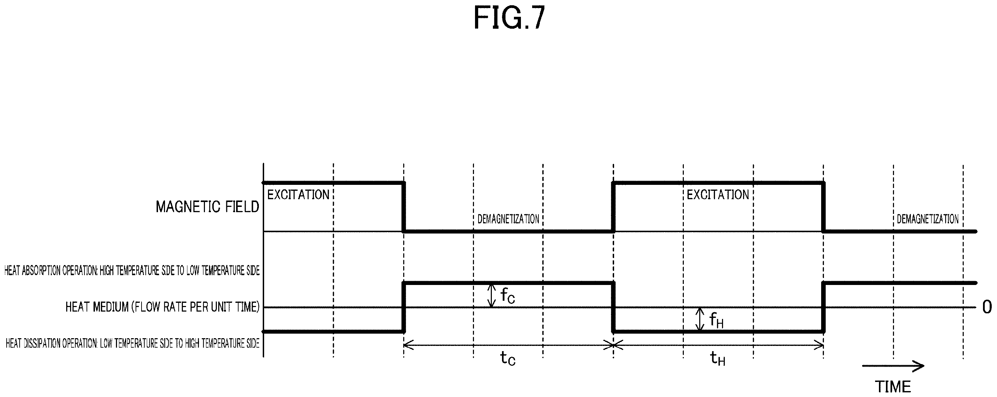

FIG. 7 illustrates a change in the magnetic field and the heat medium flow rate with time during a normal operation of the magnetic refrigeration apparatus (1). As illustrated in FIG. 7, in the normal operation, the amount of movement of the heat medium is set to be the same between the heat dissipation operation and the heat absorption operation. Specifically, when the flow rate of the heat medium per unit time and a conveying time for the heat medium in the heat dissipation operation are f_{H} and t_{H}, respectively, and the flow rate of the heat medium per unit time and a conveying time for the heat medium in the heat absorption operation are f_{C} and t_{C}, respectively, f_{C} ≈ f_{H} and t_{C} ≈ t_{H}, and the amount f_{H} × t_{H} of movement of the heat medium in the heat dissipation operation and the amount f_{C} × t_{C} of movement of the heat medium in the heat absorption operation are substantially equal to each other.

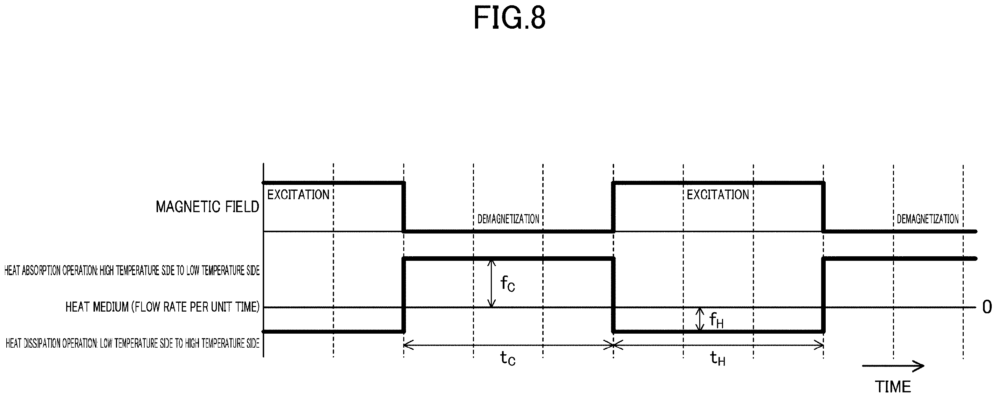

FIG. 8 illustrates a change in the magnetic field and the heat medium flow rate with time when the flow rate of the heat medium per unit time is changed in the magnetic refrigeration apparatus (1). Specifically, in FIG. 8, the flow rate f_{H} of the heat medium per unit time in the heat dissipation operation is set to be lower than that in the normal operation, and the flow rate f_{C} of the heat medium per unit time in the heat absorption operation is set to be higher than that in the normal operation. That is, a relationship f_{H} < f_{C} is set. The conveying time for the heat medium is t_{C} ≈ t_{H}, which is the same as that in the normal operation, and the magnetic field change is also the same as that in the normal operation. In this case, the amount f_{C} × t_{C} of movement of the heat medium in the heat absorption operation is greater than the amount f_{H} × t_{H} of movement of the heat medium in the heat dissipation operation, and therefore, the "amount of warm thermal energy stored in the magnetic working substance (12) in the heat dissipation operation" is greater than the "amount of cold thermal energy stored in the magnetic working substance (12) in the heat absorption operation", resulting in an increase in temperature of the magnetic working substance (12). Thus, in a case where the temperature of the magnetic working substance (12) is lower than the Curie temperature at the time of starting the magnetic refrigeration apparatus (1), the heat exchange amount changer, i.e., the controller (30) and the reciprocating pump (21), controls the flow rate of the heat medium as illustrated in FIG. 8, whereby the temperature of the magnetic working substance (12) can be brought close to the Curie temperature. This allows the magnetic refrigeration apparatus (1) to be quickly started. Further, even in a case where the temperature of the magnetic working substance (12) deviates from the Curie temperature due to, e.g., a rapid load change during operation of the magnetic refrigeration apparatus (1), and the magnetic refrigeration apparatus (1) cannot fulfill a predetermined ability, the temperature of the magnetic working substance (12) is quickly brought close to the Curie temperature, whereby the magnetic refrigeration apparatus (1) can fulfill the predetermined ability.

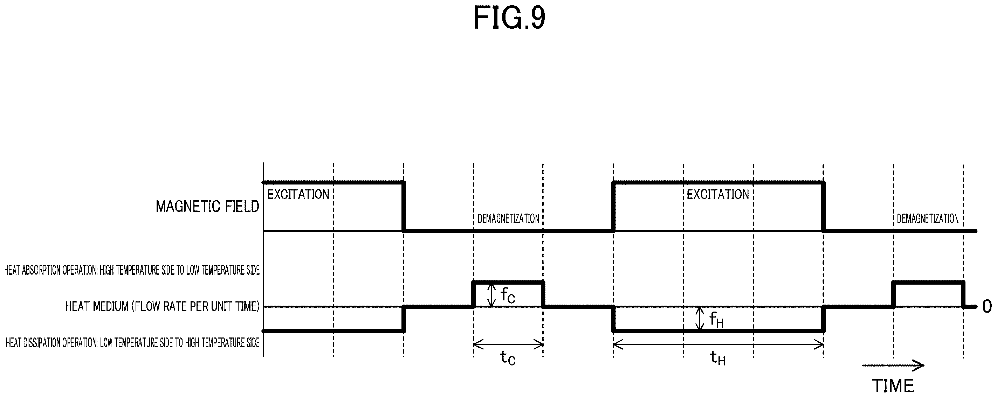

Instead of the control of the flow rate of the heat medium as illustrated in FIG. 8, the conveying time for the heat medium may be changed as illustrated in FIG. 9. Specifically, in FIG. 9, the conveying time t_{H} for the heat medium in the heat dissipation operation is set to be the same as that in the normal operation, and the conveying time t_{C} for the heat medium in the heat absorption operation is set to be shorter than that in the normal operation. That is, t_{H}> t_{C} is set. The flow rate of the heat medium per unit time is f_{C} ≈ f_{H}, which is the same as that in the normal operation, and the magnetic field change is also the same as that in the normal operation. In this case, the amount f_{H} × t_{H} of movement of the heat medium in the heat dissipation operation is greater than the amount f_{C} × t_{C} of movement of the heat medium in the heat absorption operation, and therefore, the "amount of warm thermal energy stored in the magnetic working substance (12) in the heat dissipation operation" is smaller than the "amount of cold thermal energy stored in the magnetic working substance (12) in the heat absorption operation", resulting in a decrease in the temperature of the magnetic working substance (12). Thus, in a case where the temperature of the magnetic working substance (12) is higher than the Curie temperature at the time of starting the magnetic refrigeration apparatus (1), the heat exchange amount changer, i.e., the controller (30) and the reciprocating pump (21), controls the flow rate of the heat medium as illustrated in FIG. 9, whereby the temperature of the magnetic working substance (12) can be brought close to the Curie temperature. This allows the magnetic refrigeration apparatus (1) to be quickly started. Further, even in a case where the temperature of the magnetic working substance (12) deviates from the Curie temperature due to, e.g., a rapid load change during operation of the magnetic refrigeration apparatus (1), and the magnetic refrigeration apparatus (1) cannot fulfill a predetermined ability, the temperature of the magnetic working substance (12) is quickly brought close to the Curie temperature, whereby the magnetic refrigeration apparatus (1) can fulfill the predetermined ability.

In FIGS. 8 and 9, only one of the flow rate of the heat medium per unit time or the conveying time for the heat medium is changeable, but instead, both the flow rate of the heat medium per unit time and the conveying time for the heat medium may be changeable.

### <Features of Embodiment>

As described above, in this embodiment, the magnetic refrigeration apparatus (1) includes the housing (11), the magnetic field modulator (15), and the heat medium conveyor (21). The housing (11) has the magnetic working substance (12) and the internal flow path (13) through which the heat medium flows while exchanging heat with the magnetic working substance (12). The magnetic field modulator (15) induces the caloric effect by making a magnetic field variation on the magnetic working substance (12) in the housing (11). The heat medium conveyor (21) conveys the heat medium to and from the magnetic working substance (12) in the housing (11) in accordance with the magnetic field variation. The magnetic refrigeration apparatus (1) performs the heat dissipation operation and the heat absorption operation. In the heat dissipation operation, the predetermined magnetic field is applied to the magnetic working substance (12), and the heat medium is moved in the first direction in the internal flow path (13), whereby the warm thermal energy generated in the magnetic working substance (12) is conveyed to the outside of the housing (11) by the heat medium. In the heat absorption operation, the magnetic field smaller than the predetermined magnetic field is applied to the magnetic working substance (12), or the predetermined magnetic field is removed, and the heat medium is moved in the second direction opposite to the first direction in the internal flow path (13), whereby the cold thermal energy generated in the magnetic working substance (12) is conveyed to the outside of the housing (11) by the heat medium. In the magnetic refrigeration apparatus (1), the controller (30) and the reciprocating pump (21) form the heat exchange amount changer configured to be capable of changing the heat exchange amount between the heat medium and the magnetic working substance (12) in at least one of the heat dissipation operation or the heat absorption operation.

According to the magnetic refrigeration apparatus (1) of this embodiment, the heat exchange amount changer is configured to be capable of changing the heat exchange amount between the heat medium and the magnetic working substance (12) in the heat dissipation operation or the heat absorption operation, so that the balance between the warm thermal energy storage amount in the magnetic working substance (12) in the heat dissipation operation and the cold thermal energy storage amount in the magnetic working substance (12) in the heat absorption operation can be changed. Thus, it is possible to realize the control for bringing the temperature of the magnetic working substance (12) close to the predetermined temperature (Curie temperature) while avoiding a cost increase and an efficiency decrease due to device or member addition, and therefore, it is possible to quickly start the magnetic refrigeration apparatus (1) and cause the magnetic refrigeration apparatus (1) to quickly fulfill a predetermined ability.

In the magnetic refrigeration apparatus (1) of this embodiment, the heat exchange amount changer may be capable of changing the heat exchange amount between the heat medium and the magnetic working substance (12) by changing the flow rate of the heat medium per unit time and/or the conveying time for the heat medium in at least one of the heat dissipation operation or the heat absorption operation.

### (First Variation)

In the magnetic refrigeration apparatus (1) of the embodiment, the inside of the housing (11) formed of the hollow case or column is filled with the magnetic working substance (12), and using the magnetic field modulator (15) formed of the electromagnet capable of modulating the magnetic field, the magnetic field variation is made on the magnetic working substance (12) in the housing (11). In this manner, the magnetic field is changed into the pulse shape as illustrated in FIGS. 7 to 9.

In contrast, a magnetic refrigeration apparatus (1) of this variation is a magnetic heat pump apparatus of a type in which a magnetic circuit rotates. In this variation, the housing (11) is, for example, an annular housing in which a plurality of heat exchange blocks arranged in an annular shape is housed. Each heat exchange block may be in an annular fan-like shape, for example. A magnetic field application mechanism is disposed so as to sandwich the heat exchange blocks in the axial direction of the annular housing. The magnetic field application mechanism includes at least one magnetic field applier disposed in proximity to the heat exchange block, and a yoke for supporting the magnetic field applier and forming a magnetic path. The magnetic field applier includes a pair of magnets sandwiching the heat exchange blocks in the axial direction of the annular housing. The magnetic field applier overlaps with a predetermined number of heat exchange blocks. The number of magnetic field appliers to be arranged is equal to the number of poles of the magnetic circuit. A rotation mechanism is disposed so as to extend in the axial direction of the annular housing through the center opening of the annular housing. The magnetic field application mechanism is rotated in the circumferential direction of the annular housing by the rotation mechanism. The annular housing, i.e., the heat exchange blocks, may be fixed. The magnetic field appliers and the heat exchange blocks are coaxially arranged at equal intervals in the circumferential direction. Thus, the heat exchange block to be excited changes from moment to moment in accordance with rotation of the magnetic field application mechanism, in other words, the magnetic field variation is made on the magnetic working substance in the heat exchange block, and therefore, the magnet rotation type magnetic refrigeration apparatus is formed. That is, in this variation, the magnetic field modulator (15) includes the magnetic field application mechanism and the rotation mechanism.

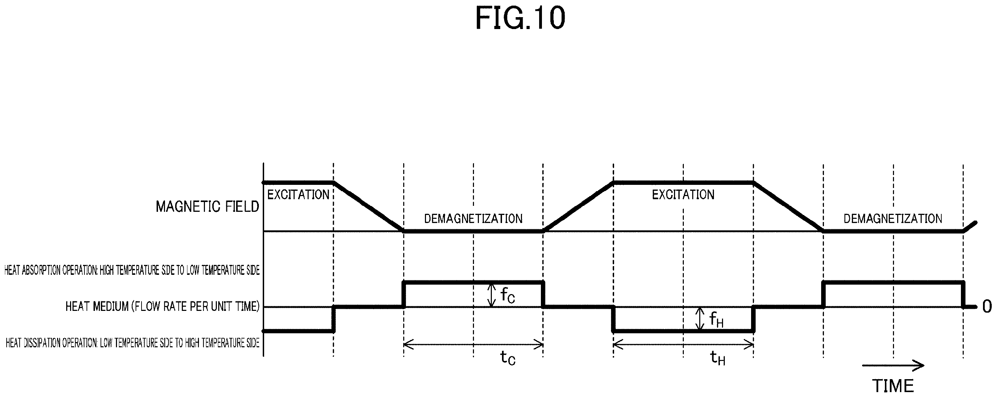

FIG. 10 illustrates a change in the magnetic field and the heat medium flow rate with time during a normal operation of the magnetic refrigeration apparatus (1) of this variation. As illustrated in FIG. 10, in the normal operation, the amount of movement of the heat medium is set to be the same between the heat dissipation operation and the heat absorption operation. Specifically, when the flow rate of the heat medium per unit time and a conveying time for the heat medium in the heat dissipation operation are f_{H} and t_{H}, respectively, and the flow rate of the heat medium per unit time and a conveying time for the heat medium in the heat absorption operation are f_{C} and t_{C}, respectively, f_{C} ≈ f_{H} and t_{C} ≈ t_{H}, and the amount f_{H} × t_{H} of movement of the heat medium in the heat dissipation operation and the amount f_{C} × t_{C} of movement of the heat medium in the heat absorption operation are substantially equal to each other.

In this variation, the magnetic field applier (magnet) rotates and moves at a predetermined rotational speed, and therefore, as illustrated in FIG. 10, there is a state in which an intermediate magnetic field between the excitation state and the demagnetization state is applied to the magnetic working substance (12) in each heat exchange block. When the heat medium is supplied at the timing at which such an intermediate magnetic field is applied and exchanges heat with the magnetic working substance (12), the magnetocaloric effect is not sufficiently generated, and for this reason, the heat exchange amount is smaller than those in the excitation state and the demagnetization state.

Using the characteristics of the magnet rotation type magnetic refrigeration apparatus in this variation, the heat exchange amount changer, i.e., the controller (30) and the reciprocating pump (21), is capable of changing the heat exchange amount between the heat medium and the solid-state refrigerant substance (12) by changing the heat medium conveying timing in at least one of the heat dissipation operation or the heat absorption operation.

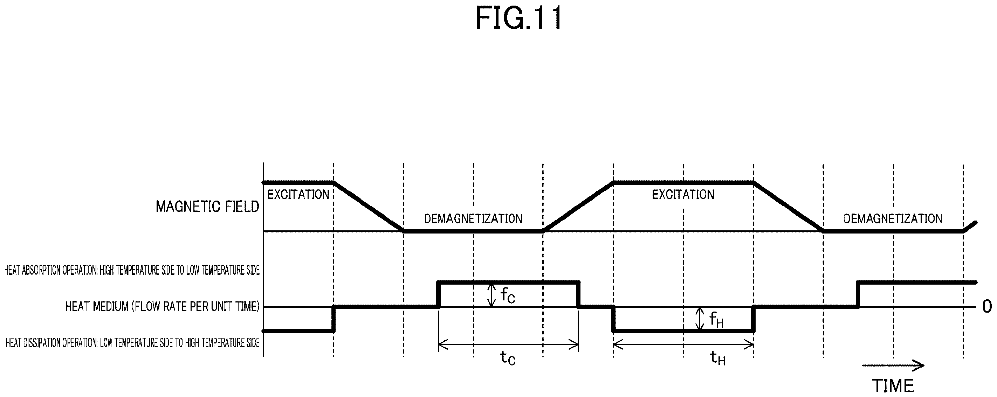

FIG. 11 illustrates a change in the magnetic field and the heat medium flow rate with time when the heat medium conveying timing is changed in the magnetic refrigeration apparatus (1) of this variation. Specifically, in FIG. 11, the flow rate of the heat medium per unit time and the conveying time for the heat medium are f_{H} ≈ f_{C} and t_{C} ≈ t_{H}, which are the same as those in the normal operation, but the heat medium conveying timing in the heat absorption operation is intentionally set to the timing at which the heat exchange amount is decreased. In this manner, the thermal energy storage amount, i.e., temperature, of the magnetic working substance (12) is adjusted. The magnetic field changes in the same manner as that in the normal operation.

In this variation, the heat exchange amount in the heat dissipation operation is greater than the heat exchange amount in the heat absorption operation, and therefore, the "amount of warm thermal energy stored in the magnetic working substance (12) in the heat dissipation operation" is smaller than the "amount of cold thermal energy stored in the magnetic working substance (12) in the heat absorption operation", resulting in a decrease in temperature of the magnetic working substance (12). Thus, in a case where the temperature of the magnetic working substance (12) is higher than the Curie temperature at the time of starting the magnetic refrigeration apparatus (1), the heat exchange amount changer, i.e., the controller (30) and the reciprocating pump (21), control the flow rate of the heat medium as illustrated in FIG. 11, whereby the temperature of the magnetic working substance (12) can be brought close to the Curie temperature. This allows the magnetic refrigeration apparatus (1) to be quickly started and to quickly fulfill a predetermined ability.

In FIG. 11, only the heat medium conveying timing is changeable, but in addition, the flow rate of the heat medium per unit time and/or the conveying time for the heat medium may also be changeable.

### (Second Variation)

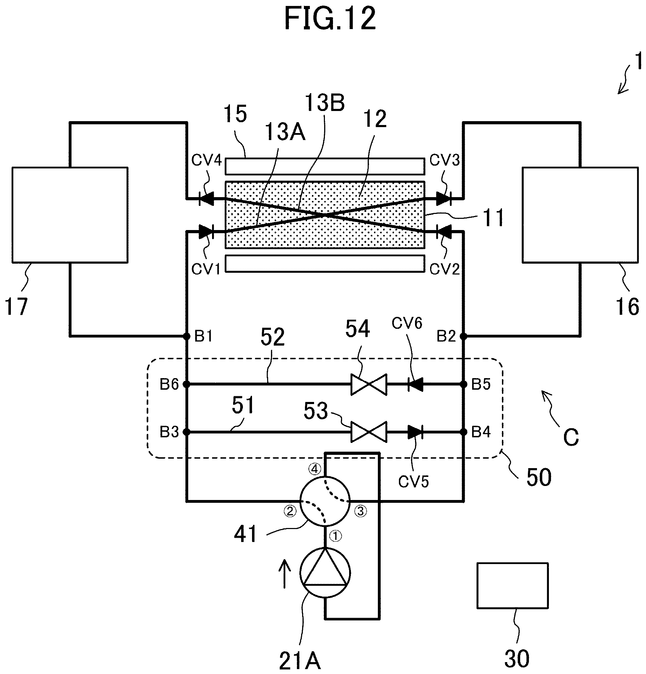

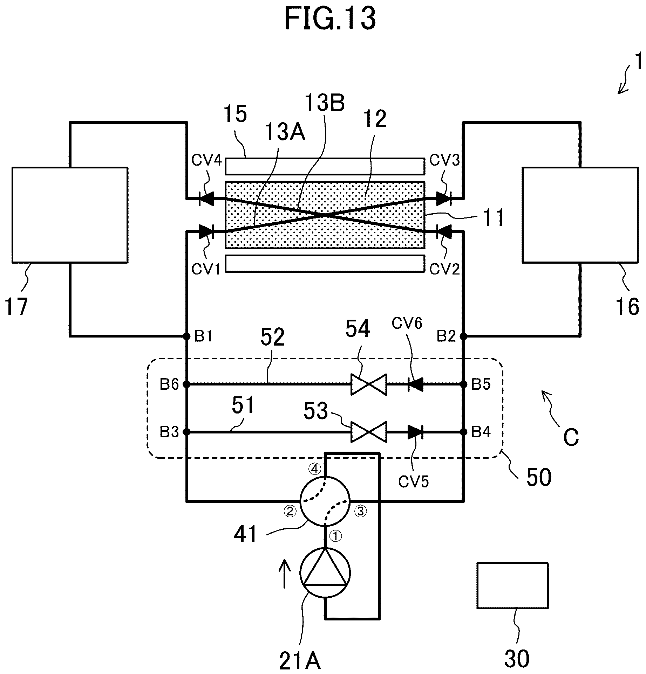

FIGS. 12 and 13 are piping system diagrams of the magnetic refrigeration apparatus (1) of this variation during the heat dissipation operation and the heat absorption operation. In FIGS. 12 and 13, the same components as those of the magnetic refrigeration apparatus (1) of the embodiment illustrated in FIG. 1 are denoted by the same reference numerals. Main points of difference between this variation and the embodiment are as follows.

As illustrated in FIGS. 12 and 13, in this variation, a first internal flow path (13A) and a second internal flow path (13B) are formed inside the housing (11). The heat medium flows from the low-temperature end to the high-temperature end in the first internal flow path (13A). Check valves (CV1), (CV3) are provided upstream of a low-temperature-side inlet port and downstream of a high-temperature-side outlet port of the first internal flow path (13A). The heat medium flows from the high-temperature end to the low-temperature end in the second internal flow path (13B). Check valves (CV2), (CV4) are provided upstream of a high-temperature-side inlet port and downstream of a low-temperature-side outlet port of the second internal flow path (13B). The low-temperature-side inlet port and high-temperature-side outlet port of the first internal flow path (13A) are each connected to an outflow portion of the second heat exchanger (17) and an inflow portion of the first heat exchanger (16). The high-temperature-side inlet port and low-temperature-side outlet port of the second internal flow path (13B) are each connected to an outflow portion of the first heat exchanger (16) and an inflow portion of the second heat exchanger (17).

In this variation, a one-way pump (21A) and a four-way switching valve (41) are provided as the heat medium conveyor, instead of the reciprocating pump (21) of the magnetic refrigeration apparatus (1) of the embodiment. The four-way switching valve (41) has a first port, a second port, a third port, and a fourth port. In FIGS. 12 and 13, the first port of the four-way switching valve (41) is denoted by an encircled numeral "1", the second port of the four-way switching valve (41) is denoted by an encircled numeral "2", the third port of the four-way switching valve (41) is denoted by an encircled numeral "3", and the fourth port of the four-way switching valve (41) is denoted by an encircled numeral "4". The first port of the four-way switching valve (41) is connected to an outflow portion of the pump (21A). The second port of the four-way switching valve (41) is connected to the low-temperature-side inlet port of the first internal flow path (13A) and the outflow portion of the second heat exchanger (17) via a branch (B1) of the heat medium circuit (C). The third port of the four-way switching valve (41) is connected to the high-temperature-side inlet port of the second internal flow path (13B) and the outflow portion of the first heat exchanger (16) via a branch (B2) of the heat medium circuit (C). The fourth port of the four-way switching valve (41) is connected to an inflow portion of the pump (21A). Operation of the pump (21A) and the four-way switching valve (41) is controlled by the controller (30). The pump (21A) and the four-way switching valve (41) are connected to the controller (30) via a communication line.

In this variation, a bypass circuit (50) is provided to connect a portion of the heat medium circuit (C) between the second port of the four-way switching valve (41) and the branch (B1) to a portion of the heat medium circuit (C) between the third port of the four-way switching valve (41) and the branch (B2). The bypass circuit (50) has a first flow path (51) and a second flow path (52).

The heat medium flows through the first flow path (51) from a branch (B3) located between the second port of the four-way switching valve (41) and the branch (B1) in the heat medium circuit (C) to a branch (B4) located between the third port of the four-way switching valve (41) and the branch (B2) in the heat medium circuit (C). The first flow path (51) is provided with a check valve (CV5) and a first control valve (53). The first control valve (53) may be a flow rate control valve whose opening degree can be finely adjusted. Operation of the first control valve (53) is controlled by the controller (30). The first control valve (53) is connected to the controller (30) via a communication line.

The heat medium flows through the second flow path (52) from a branch (B5) located between the third port of the four-way switching valve (41) and the branch (B2) in the heat medium circuit (C) to a branch (B6) located between the second port of the four-way switching valve (41) and the branch (B1) in the heat medium circuit (C). The second flow path (52) is provided with a check valve (CV6) and a second control valve (54). The second control valve (54) may be a flow rate control valve whose opening degree can be finely adjusted. Operation of the second control valve (54) is controlled by the controller (30). The second control valve (54) is connected to the controller (30) via a communication line.

In the heat dissipation operation of the magnetic refrigeration apparatus (1) of this variation, as illustrated in FIG. 12, a predetermined magnetic field is applied to the magnetic working substance (12) in a state in which the first port and the second port communicate with each other and the third port and the fourth port communicate with each other in the four-way switching valve (41). The heat medium sent from the pump (21A) flows into the first internal flow path (13A) of the housing (11) via the four-way switching valve (41), and is heated in the first internal flow path (13A). The heated heat medium dissipates heat in the first heat exchanger (16), and then returns to the pump (21A) via the four-way switching valve (41).

In the heat absorption operation of the magnetic refrigeration apparatus (1) of this variation, as illustrated in FIG. 13, a magnetic field smaller than the predetermined magnetic field is applied to the magnetic working substance (12) or the predetermined magnetic field is removed in a state in which the first port and the third port communicate with each other and the second port and the fourth port communicate with each other in the four-way switching valve (41). The heat medium sent from the pump (21A) flows into the second internal flow path (13B) of the housing (11) via the four-way switching valve (41), and is cooled in the second internal flow path (13B). The cooled heat medium absorbs heat in the second heat exchanger (17), and then returns to the pump (21A) via the four-way switching valve (41).

In the heat dissipation operation illustrated in FIG. 12, a pressure loss in the first flow path (51) of the bypass circuit (50) can be controlled by adjusting the opening degree of the first control valve (53), and therefore, the flow rate of the heat medium flowing into the first internal flow path (13A) of the housing (11) per unit time is changeable.

In the heat absorption operation illustrated in FIG. 13, a pressure loss in the second flow path (52) of the bypass circuit (50) can be controlled by adjusting the opening degree of the second control valve (54), and therefore, the flow rate of the heat medium flowing into the second internal flow path (13B) of the housing (11) per unit time is changeable.

Thus, in the magnetic refrigeration apparatus (1) of this variation, the controller (30) controls the first control valve (53) and the second control valve (54) to be capable of changing the heat exchange amount between the heat medium and the magnetic working substance (12) in at least one of the heat dissipation operation or the heat absorption operation. That is, in this variation, the controller (30), the first control valve (53), and the second control valve (54) form the heat exchange amount changer.

The controller (30) may be provided separately from the first control valve (53) and the second control valve (54), or part of the controller (30) that has the heat exchange amount changing function may be provided integrally with the first control valve (53) and the second control valve (54).

In addition, it is preferable that the opening of the bypass circuit (50) (first flow path (51) and second flow path (52)) by the heat exchange amount changer of this variation is limited to short time to the extent that the high-temperature heat medium and the low-temperature heat medium are not mixed.

### (Third Variation)

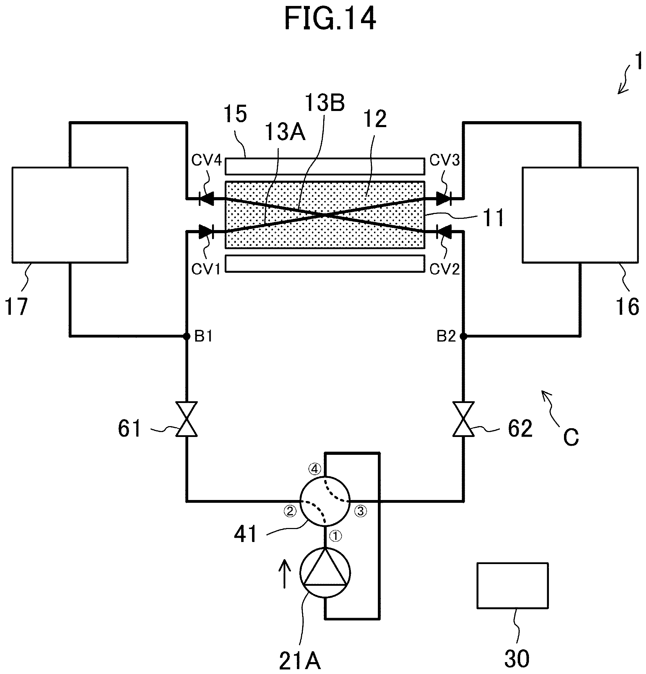

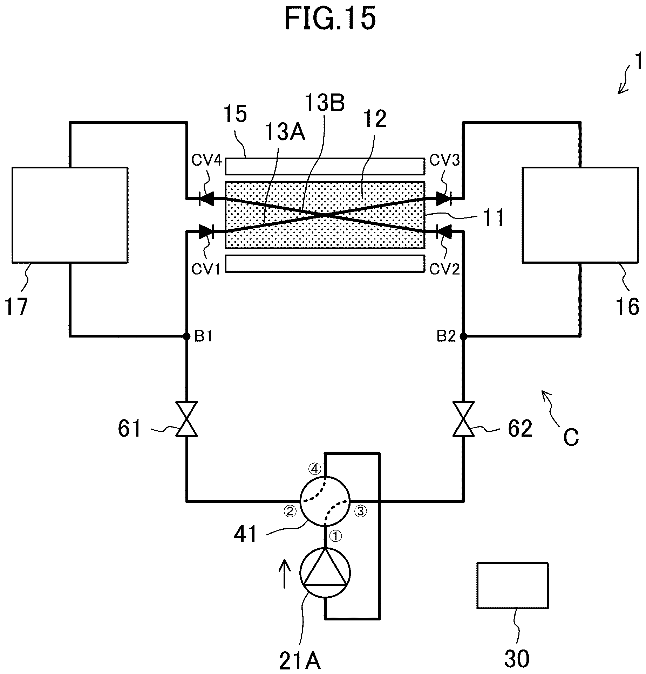

FIGS. 14 and 15 are piping system diagrams of the magnetic refrigeration apparatus (1) of this variation during the heat dissipation operation and the heat absorption operation. In FIGS. 14 and 15, the same components as those of the magnetic refrigeration apparatus (1) of the second variation illustrated in FIGS. 12 and 13 are denoted by the same reference numerals. Main points of difference between this variation and the second variation are as follows.

As illustrated in FIGS. 14 and 15, in this variation, shutoff valves (61, 62) are provided instead of the bypass circuit (50) of the magnetic refrigeration apparatus (1) of the second variation. Specifically, a first shutoff valve (61) is provided between the second port of the four-way switching valve (41) and the branch (B1) in the heat medium circuit (C), and a second shutoff valve (62) is provided between the third port of the four-way switching valve (41) and the branch (B2) in the heat medium circuit (C). The first shutoff valve (61) and the second shutoff valve (62) are configured to be openable and closable at any timing. Operation of the first shutoff valve (61) and the second shutoff valve (62) is controlled by the controller (30). The first shutoff valve (61) and the second shutoff valve (62) are connected to the controller (30) via a communication line.

In the heat dissipation operation of the magnetic refrigeration apparatus (1) of this variation, as illustrated in FIG. 14, a predetermined magnetic field is applied to the magnetic working substance (12) in a state in which the first port and the second port communicate with each other and the third port and the fourth port communicate with each other in the four-way switching valve (41). The heat medium sent from the pump (21A) flows into the first internal flow path (13A) of the housing (11) via the four-way switching valve (41) and the first shutoff valve (61), and is heated in the first internal flow path (13A). Part of the heated heat medium dissipates heat in the first heat exchanger (16), and then returns to the pump (21A) via the second shutoff valve (62) and the four-way switching valve (41).

In the heat absorption operation of the magnetic refrigeration apparatus (1) of this variation, as illustrated in FIG. 15, a magnetic field smaller than the predetermined magnetic field is applied to the magnetic working substance (12) or the predetermined magnetic field is removed in a state in which the first port and the third port communicate with each other and the second port and the fourth port communicate with each other in the four-way switching valve (41). The heat medium sent from the pump (21A) flows into the second internal flow path (13B) of the housing (11) via the four-way switching valve (41) and the second shutoff valve (62), and is cooled in the second internal flow path (13B). The cooled heat medium absorbs heat in the second heat exchanger (17), and then returns to the pump (21A) via the first shutoff valve (61) and the four-way switching valve (41).

In the magnetic refrigeration apparatus (1) of this variation, the controller (30) controls the first shutoff valve (61) and the second shutoff valve (62) to be capable of changing the conveying time and/or conveying timing for the heat medium in at least one of the heat dissipation operation or the heat absorption operation. This makes it possible to change the heat exchange amount between the heat medium and the magnetic working substance (12) in at least one of the heat dissipation operation or the heat absorption operation. That is, in this variation, the controller (30), the first shutoff valve (61), and the second shutoff valve (62) form the heat exchange amount changer. For example, using the first shutoff valve (61) and the second shutoff valve (62), the conveying time for the heat medium is shortened or the heat medium conveying timing is intentionally shifted with respect to the magnetic field variation. In this manner, the heat exchange amount can be decreased.

The controller (30) may be provided separately from the first shutoff valve (61) and the second shutoff valve (62), or part of the controller (30) that has the heat exchange amount changing function may be provided integrally with the first shutoff valve (61) and the second shutoff valve (62).

In this variation, a similar effect can also be obtained even when only one of the first shutoff valve (61) or the second shutoff valve (62) is provided. Alternatively, a similar effect can also be obtained even when a four-way switching valve (41) having a shutoff valve function is provided instead of the first shutoff valve (61) and the second shutoff valve (62).

### (Fourth Variation)

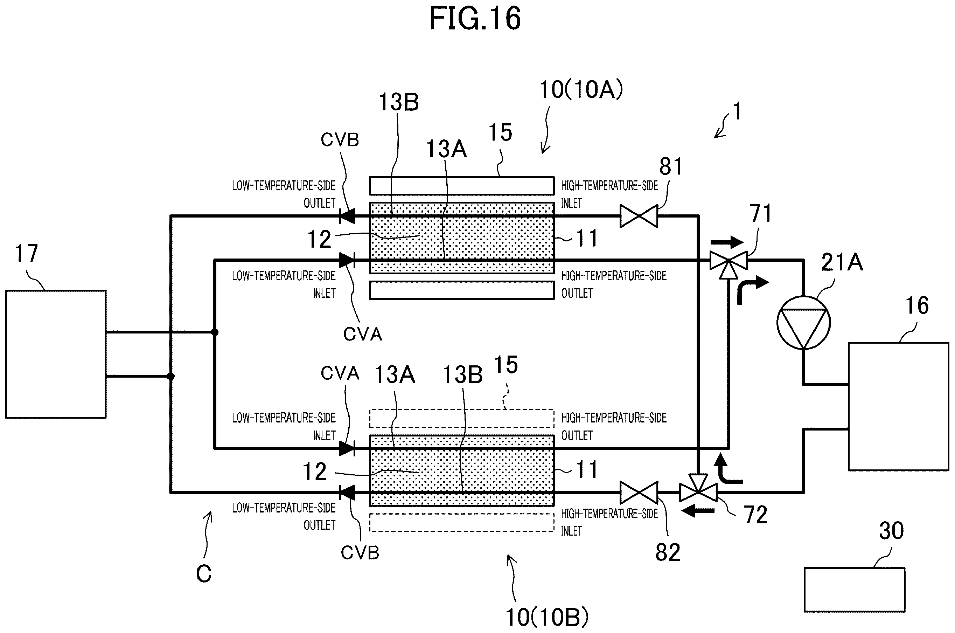

FIG. 16 is a piping system diagram of a magnetic refrigeration apparatus (1) of this variation. In FIG. 16, the same components as those of the magnetic refrigeration apparatus (1) of the embodiment illustrated in FIG. 1 are denoted by the same reference numerals. Main points of difference between this variation and the embodiment are as follows.

As illustrated in FIG. 16, the magnetic refrigeration apparatus (1) of this variation includes two magnetic refrigeration units (10) each including the housing (11) and the magnetic field modulator (15), specifically a first magnetic refrigeration unit (10A) and a second magnetic refrigeration unit (10B). In each magnetic refrigeration unit (10), the first internal flow path (13A) and the second internal flow path (13B) are formed inside the housing (11). The heat medium flows from the low-temperature end to the high-temperature end in the first internal flow path (13A). A check valve (CVA) is provided upstream of the low-temperature-side inlet port of the first internal flow path (13A). The heat medium flows from the high-temperature end to the low-temperature end in the second internal flow path (13B). A check valve (CVB) is provided downstream of the low-temperature-side outlet port of the second internal flow path (13B).

The low-temperature-side inlet port of the first internal flow path (13A) of each magnetic refrigeration unit (10) is connected to the outflow portion of the second heat exchanger (17). The high-temperature-side outlet port of the first internal flow path (13A) of each magnetic refrigeration unit (10) is connected to the inflow portion of the first heat exchanger (16) via a first three-way valve (71) and the pump (21A).

The high-temperature-side inlet port of the second internal flow path (13B) of each magnetic refrigeration unit (10) is connected to the inflow portion of the first heat exchanger (16) via a second three-way valve (72). The low-temperature-side outlet port of the second internal flow path (13B) of each magnetic refrigeration unit (10) is connected to the inflow portion of the second heat exchanger (17).

In this variation, the one-way pump (21A), the first three-way valve (71), and the second three-way valve (72) are provided as the heat medium conveyor, instead of the reciprocating pump (21) of the magnetic refrigeration apparatus (1) of the embodiment.

In this variation, a first control valve (81) is provided between the high-temperature-side inlet port of the second internal flow path (13B) of the first magnetic refrigeration unit (10A) and the second three-way valve (72), and a second control valve (82) is provided between the high-temperature-side inlet port of the second internal flow path (13B) of the second magnetic refrigeration unit (10B) and the second three-way valve (72). The first control valve (81) and the second control valve (82) may be flow rate control valves whose opening degrees can be finely adjusted. Operation of the first control valve (81) and the second control valve (82) is controlled by the controller (30). The first control valve (81) and the second control valve (82) are connected to the controller (30) via a communication line.

In the magnetic refrigeration apparatus (1) of this variation, the second magnetic refrigeration unit (10B) performs the heat absorption operation when the first magnetic refrigeration unit (10A) performs the heat dissipation operation, and the second magnetic refrigeration unit (10B) performs the heat dissipation operation when the first magnetic refrigeration unit (10A) performs the heat absorption operation. That is, operation of the first magnetic refrigeration unit (10A) and operation of the second magnetic refrigeration unit (10B) are in opposite phases.

Specifically, in the heat dissipation operation of the first magnetic refrigeration unit (10A), the heat medium heated in the first internal flow path (13A) by applying a predetermined magnetic field to the magnetic working substance (12) flows into the first heat exchanger (16) via the first three-way valve (71) and the pump (21A) and dissipates heat, and then flows into the first internal flow path (13A) again through the second three-way valve (72), the first control valve (81), the second internal flow path (13B), and the second heat exchanger (17). Meanwhile, in the heat absorption operation of the second magnetic refrigeration unit (10B), the heat medium cooled in the second internal flow path (13B) by applying a magnetic field smaller than the predetermined magnetic field to the magnetic working substance (12) or removing the predetermined magnetic field flows into the second heat exchanger (17) and absorbs heat, and then flows into the second internal flow path (13B) again through the first internal flow path (13A), the first three-way valve (71), the pump (21A), the first heat exchanger (16), the second three-way valve (72), and the second control valve (82).

On the other hand, in the heat absorption operation of the first magnetic refrigeration unit (10A), the heat medium cooled in the second internal flow path (13B) by applying a magnetic field smaller than a predetermined magnetic field to the magnetic working substance (12) or removing the predetermined magnetic field flows into the second heat exchanger (17) and absorbs heat, and then flows into the second internal flow path (13B) again through the first internal flow path (13A), the first three-way valve (71), the pump (21A), the first heat exchanger (16), the second three-way valve (72), and the first control valve (81). Meanwhile, in the heat dissipation operation of the second magnetic refrigeration unit (10B), the heat medium heated in the first internal flow path (13A) by applying a predetermined magnetic field to the magnetic working substance (12) flows into the first heat exchanger (16) via the first three-way valve (71) and the pump (21A) and dissipates heat, and then flows into the first internal flow path (13A) again through the second three-way valve (72), the second control valve (82), the second internal flow path (13B), and the second heat exchanger (17).

In the magnetic refrigeration apparatus (1) of this variation, the controller (30) controls the first control valve (81) and the second control valve (82) to be capable of changing the flow rate of the heat medium per unit time in at least one of the heat dissipation operation or the heat absorption operation of each magnetic refrigeration unit (10). This makes it possible to change the heat exchange amount between the heat medium and the magnetic working substance (12) in at least one of the heat dissipation operation or the heat absorption operation of each magnetic refrigeration unit (10). That is, in this variation, the controller (30), the first control valve (81), and the second control valve (82) form the heat exchange amount changer.

The controller (30) may be provided separately from the first control valve (81) and the second control valve (82), or part of the controller (30) that has the heat exchange amount changing function may be provided integrally with the first control valve (81) and the second control valve (82).

As described above, in the magnetic refrigeration apparatus (1) of this variation, operation of the first magnetic refrigeration unit (10A) and operation of the second magnetic refrigeration unit (10B) are in the opposite phases. Thus, for example, when the flow rate of the heat medium in the heat dissipation operation of the first magnetic refrigeration unit (10A) is decreased, the flow rate of the heat medium in the heat absorption operation of the second magnetic refrigeration unit (10B) also decreases, and as a result, the material temperature of the first magnetic refrigeration unit (10A) increases, but the material temperature of the second magnetic refrigeration unit (10B) decreases. Thus, the material temperatures of both the magnetic refrigeration units (10) cannot be increased or decreased simultaneously. However, in a case where the material temperature TA of the first magnetic refrigeration unit (10A) and the material temperature TB of the second magnetic refrigeration unit (10B) are different from each other, for example, a case of TA< TB or a case of TA > TB, the controller (30) controls the first control valve (81) and the second control valve (82) to adjust the temperature to a state of TA = TB.

### (Other Embodiments)

In the above-described embodiments and variations, the magnetic refrigeration apparatus as the solid-state refrigeration apparatus has been described as an example. However, the solid-state refrigeration apparatus may be of a type other than the magnetic refrigeration type configured to induce the magnetocaloric effect in the magnetic working substance (12). In the present disclosure, the solid-state refrigerant substance includes those having an intermediate property between liquid and solid, such as flexible crystal.

Other types of solid-state refrigeration apparatus include, for example, (1) a type that causes a solid-state refrigerant substance to induce an electrocaloric effect, (2) a type that causes a solid-state refrigerant substance to induce a barocaloric effect, and (3) a type that causes a solid-state refrigerant substance to induce an elastocaloric effect.

A force field applier (hereinafter also referred to as an inducer) of the solid-state refrigeration apparatus of the type (1) makes an electric field variation on the solid-state refrigerant substance. This causes a phase transition of the solid-state refrigerant substance, for example, from ferroelectric to paraelectric, thereby causing the solid-state refrigerant substance to generate or absorb heat.

An inducer of the solid-state refrigeration apparatus of the type (2) makes a pressure variation on the solid-state refrigerant substance. Accordingly, the solid-state refrigerant substance undergoes a phase transition, and therefore, generates or absorbs heat.

An inducer of the solid-state refrigeration apparatus of the type (3) makes a stress variation on the solid-state refrigerant substance. Accordingly, the solid-state refrigerant substance undergoes a phase transition, and therefore, generates or absorbs heat.

While the embodiments and variations have been described above, it will be understood that various changes in form and details can be made without departing from the spirit and scope of the claims. The above-described embodiments and variations may be appropriately combined or replaced. The expressions of "first", "second", . . . described above are used to distinguish the terms to which these expressions are given, and do not limit the number and order of the terms.

### INDUSTRIAL APPLICABILITY

As described above, the present disclosure is useful for a solid-state refrigeration apparatus, in particular, a magnetic refrigeration apparatus.

### DESCRIPTION OF REFERENCE CHARACTERS

- 1: Magnetic Refrigeration Apparatus (Solid-State Refrigeration Apparatus)
- 11: Housing
- 12: Magnetic Working Substance (Solid-State Refrigerant Substance)
- 13: Internal Flow Path
- 15: Magnetic Field Modulator (Force Field Modulator)
- 21: Reciprocating Pump (Heat Medium Conveyor)
- 21A: Pump (Heat Medium Conveyor)
- 30: Controller (Heat Exchange Amount Changer)
- 53, 54: Control Valve (Heat Exchange Amount Changer)
- 61, 62: Shutoff Valve (Heat Exchange Amount Changer)
- 81, 82: Control Valve (Heat Exchange Amount Changer)

## Claims

1. A solid-state refrigeration apparatus comprising:
a housing (11) having a solid-state refrigerant substance (12) and an internal flow path (13) through which a heat medium flows while exchanging heat with the solid-state refrigerant substance (12),
a force field modulator (15) configured to induce a caloric effect by making a force field variation on the solid-state refrigerant substance (12) in the housing (11), and
a heat medium conveyor (21, 21A) configured to convey the heat medium to and from the solid-state refrigerant substance (12) in the housing (11) in accordance with the force field variation,
the solid-state refrigeration apparatus being configured to perform a heat dissipation operation of applying a predetermined force field to the solid-state refrigerant substance (12) and moving the heat medium in a first direction in the internal flow path (13) to convey warm thermal energy generated in the solid-state refrigerant substance (12) to an outside of the housing (11) by the heat medium and a heat absorption operation of applying a force field smaller than the predetermined force field to the solid-state refrigerant substance (12) or removing the predetermined force field and moving the heat medium in a second direction opposite to the first direction in the internal flow path (13) to convey cold thermal energy generated in the solid-state refrigerant substance (12) to the outside of the housing (11) by the heat medium,
the solid-state refrigeration apparatus further comprising a heat exchange amount changer (30, 53, 54, 61, 62, 81, 82) configured to be capable of changing a heat exchange amount between the heat medium and the solid-state refrigerant substance (12) in at least one of the heat dissipation operation or the heat absorption operation.

2. The solid-state refrigeration apparatus of claim 1, wherein
the heat exchange amount changer (30, 53, 54, 61, 62, 81, 82) is configured to be capable of changing a flow rate of the heat medium per unit time in at least one of the heat dissipation operation or the heat absorption operation.

3. The solid-state refrigeration apparatus of claim 1, wherein
the heat exchange amount changer (30, 53, 54, 61, 62, 81, 82) is configured to be capable of changing a conveying time for the heat medium in at least one of the heat dissipation operation or the heat absorption operation.

4. The solid-state refrigeration apparatus of claim 1, wherein
the heat exchange amount changer (30, 53, 54, 61, 62, 81, 82) is configured to be capable of changing heat medium conveying timing in at least one of the heat dissipation operation or the heat absorption operation.

5. The solid-state refrigeration apparatus of any one of claims 1 to 4, wherein
the solid-state refrigerant substance (12) is a magnetic working substance (12), and
the force field modulator (15) is a magnetic field modulator (15) that makes a magnetic field variation on the magnetic working substance (12).
